# EUROPÄISCHE PATENTSCHRIFT

(11) **EP 1 777 980 B1**
(45) Veröffentlichungstag und Bekanntmachung des Hinweises auf die Patenterteilung: **10.08.2016**
(21) Anmeldenummer: 06018073.4
(22) Anmeldetag: 30.08.2006
(51) Int. Cl.: H04W 8/08, H04W 8/04, H04W 8/18, H04W 8/26, H04W 80/10, H04W 92/02

(54) **Austausch von Informationen in einem Kommunikationssystem**
Exchange of information in a communication system
Procédé d'échange d'information dans un système de communication

(30) Priorität: 21.10.2005 DE 102005050937
(43) Veröffentlichungstag der Anmeldung: 25.04.2007
(73) Patentinhaber: Vodafone Holding GmbH, 40213 Düsseldorf (DE)
(72) Erfinder: Zalnieriunas, Alejandro Dr., 40474 Düsseldorf (DE)
(74) Vertreter: Weisbrodt, Bernd

(56) Entgegenhaltungen:
- EP-A1- 1 246 496
- EP-A2- 1 126 738
- WO-A1-2005/022863
- '3rd Generation Partnership Project; Technical Specification Group Services and System Aspects; Presence Service; Architecture and functional description (Release 7)' 3GPP STANDARD; 3GPP TS 23.141 Nr. V7.0.0, 01 September 2005, Seiten 1 - 36, XP050362854

## Beschreibung

Die vorliegende Erfindung betrifft ein Kommunikationssystem bestehend aus einem zellularen Mobilfunknetz mit darin betreibbaren mobilen Endgeräten, vorzugsweise gemäß dem GSM- und/oder UMTS-Funknetzstandard, und einem Rechnernetz, vorzugsweise dem Internet, mit Datenendeinrichtungen, wobei Informationen im Mobilfunknetz unter Nutzung wenigstens eines Protokolls des Mobilfunknetzes und Informationen im Rechnernetz unter Nutzung wenigstens eines Protokolls des Rechnernetzes übertragen werden. Ferner betrifft die vorliegende Erfindung Verfahren zum Austausch von Informationen zwischen in einem zellularen Mobilfunknetz betreibbaren mobilen Endgeräten, vorzugsweise gemäß dem GSM- und/oder UMTS-Funknetzstandard, und/oder Datenendeinrichtungen eines Rechnernetzes, vorzugsweise dem Internet, in einem erfindungsgemäßen Kommunikationssystem.

Derartige Kommunikationssysteme und Verfahren zum Informationsaustausch in diesen sind im Stand der Technik in zahlreichen Ausgestaltungen bekannt. So können Nutzer von Datenendeinrichtungen eines Rechnernetzes wie dem Internet Kommunikationsverbindungen zu ein in einem zellularen Mobilfunknetz betreibbares mobiles Endgerät nutzenden Teilnehmern aufbauen. Derartige Kommunikationsverbindungen von Datenendeinrichtungen des Internets als Rechnernetz im Sinne der vorliegenden Erfindung zu in Mobilfunknetzen betreibbaren mobilen Endgeräten werden aber bisher lediglich für spezielle Dienste wie sogenannte Sprachtelefonie (Voice over IP) oder SMS unterstützt. Entsprechende Kommunikationsverbindungen können dabei bisher lediglich von Internetteilnehmern aus ausgehend zu Mobilfunkteilnehmern aufgebaut werden. Darüber hinaus werden seitens zellularer Mobilfunknetze für darin betreibbare mobile Endgeräte Dienste bereitgestellt, die einen Zugriff auf beziehungsweise zu Rechnernetzen wie dem Internet mit einem entsprechenden Austausch von Daten als Informationen ermöglichen. In Mobilfunknetzen betreibbaren mobilen Endgeräten werden dabei seitens der Mobilfunknetze Dienste wie E-Mail, WAP oder dergleichen Internetdienste bereitgestellt beziehungsweise zur Verfügung gestellt.

Die vorbekannten Kommunikationssysteme und die in beziehungsweise mit diesen genutzten Verfahren zum Austausch von Informationen zwischen in einem zellularen Mobilfunknetz betreibbaren mobilen Endgeräten und/oder Datenendeinrichtungen eines Rechnernetzes weisen eine oder mehrere der nachfolgenden Beschränkungen auf:
- Zum einen wird lediglich eine Kommunikation zwischen Nutzern des Internets als Rechnernetz unterstützt. Dabei kann der Zugang des Nutzers zu dem Internet jedoch auch über ein Mobilfunknetz erfolgen.
- Eine Kommunikation zwischen Mobilfunknetzteilnehmern und Internetnutzern wird - wie bereits erläutert - lediglich für spezielle Dienste wie Sprachtelefonie (Voice over IP) oder SMS unterstützt.
- Eine Kommunikation zwischen einem Mobilfunkteilnehmer und einem Internetznutzer wird - wie bereits erläutert - lediglich in einer Richtung unterstützt, beispielsweise Sprachtelefonie (Voice over IP) oder SMS vom Internetz zum Mobilfunknetz, nicht jedoch vom Mobilfunknetz zum Internet als Rechnernetz im Sinne der vorliegenden Erfindung.
- Identitäten der Teilnehmer beziehungsweise Nutzer im Mobilfunknetz beziehungsweise seitens des Rechnernetzes sind in den beiden Netzen der bisher bekannten Kommunikationssysteme, also im Mobilfunknetz einerseits und dem Rechnernetz (Internet) andererseits nicht transparent und nicht übergreifend verfügbar beziehungsweise nutzbar.
- Die Präsenz der Teilnehmer beziehungsweise Nutzer der beiden Netze vorbekannter Kommunikationssysteme, also einem Mobilfunknetz einerseits und dem Internet als Rechnernetz andererseits, hinsichtlich Erreichbarkeit, Status und/oder Aufenthaltsort in selbigen sind weder transparent noch übergreifend für beziehungsweise in beiden verfügbar und/oder nutzbar.
- Mobilfunkteilnehmer sind bei einem Zugriff auf vorbekannte Kommunikationssysteme von einem mobilfunknetzfremden Internetzugang aus nicht unter der ihnen netzeigenen Mobilfunknetzrufnummer erreichbar.

Dokument EP1 246 496 A1 beschreibt ein Verfahren zur Bereitstellung eines gemeinsamen MultiProtokoll Teilnehmer-Heimatregister MP-HLR. Mehrere unterschiedliche Netzwerke wie Datennetze (SIP, IP) und zellulare Netze (GSM) können über protokollspezifische Schnittstellen auf eine gemeinsame Datenbasis zugreifen.

Dokument "3GPP: Technical Specification Group Services and System Aspects; Presence Service; Architecture and functional description (Release 7)", 3GPP STANDARD,TS 23.141, beschreibt die allgemeinen Architektur-Lösungen und Funktionalitäten von Presence-Diensten in 3GPP.

Dokument WO2005/022863 A1 zeigt ein System zur Realisierung von gemeinsamen Presence Diensten zwischen heterogenen Netzen, wobei netzspezifische Presence Nachrichten über ein gemeinsames Netz (SIP SIMPLE) übermittelt werden.

Der vorliegenden Erfindung liegt in Anbetracht dieses Standes der Technik die Aufgabe zugrunde, unter Meidung der beschriebenen Nachteile einen verbesserten und umfangreicheren netzübergreifenden Informationsaustausch zu ermöglichen.

Zur technischen Lösung wird mit der vorliegenden Erfindung ein Kommunikationssystem bestehend aus einem zellularen Mobilfunknetz mit darin betreibbaren mobilen Endgeräten, gemäß dem GSM- und/oder UMTS-Funknetzstandard, einem Rechnernetz, mit Datenendeinrichtungen und einem zentralen unterregister, gemäß anspruch 1 vorgeschlagen.

Der Erfindung liegt die Erkenntnis zugrunde, dass durch ein zentrales Nutzerregister mit eindeutigen Teilnehmeridentitäten im erfindungsgemäßen Kommunikationssystem eine netzübergreifende Verwaltung von Mobilfunkteilnehmern und Internetnutzern erzielbar ist. Die den Teilnehmern des Kommunikationssystems dabei netzübergreifend zugeordnete eindeutige Identität ermöglicht vorteilhafterweise einen verbesserten Informationsaustausch zwischen dem Mobilfunknetz und dem Rechnernetz, insbesondere da erfindungsgemäß vorteilhafterweise seitens des Mobilfunknetzes und seitens des Rechnernetzes eine einheitlich ausgebildete beziehungsweise ausgestaltete eindeutige Teilnehmeridentität zur Nutzung bereitgestellt wird.

Das zentrale netzübergreifende Nutzerregister des erfindungsgemäßen Kommunikationssystems erlaubt vorteilhafterweise eine Verwaltung und Bereitstellung von Präsenzinformationen von Teilnehmern des Kommunikationssystems, also von Mobilfunkteilnehmern und/oder Internetnutzern, hinsichtlich deren Erreichbarkeit, deren Status und/oder deren Aufenthaltsort im Kommunikationssystem, also im Mobilfunknetz und/oder im Rechnernetz.

Vorteilhafterweise ermöglicht das zentrale Nutzerregister des erfindungsgemäßen Kommunikationssystems aufgrund der eindeutigen Teilnehmeridentität eine transparente Erreichbarkeit eines Teilnehmers eines Mobilfunknetzes bei Zugang zum erfindungsgemäßen Kommunikationssystem über einen mobilfunknetzfremden Rechnernetzzugang, vorzugsweise Internetzugang, unter seiner entsprechenden Teilnehmeridentität. Dabei ermöglicht das erfindungsgemäße zentrale Nutzerregister eindeutiger Teilnehmeridentitäten eine Erreichbarkeit des Teilnehmers im Rechnernetz unter der Identität des Teilnehmers im Mobilfunknetz, vorzugsweise der dem Mobilfunkteilnehmer im Mobilfunknetz zugeordneten netzspezifischen Mobilfunknetz-Rufnummer (MSISDN).

Darüber hinaus ermöglicht das erfindungsgemäße zentrale Nutzerregister eindeutiger Teilnehmeridentitäten des erfindungsgemäßen Kommunikationssystems vorteilhafterweise die Verfügbarkeit und Nutzbarkeit von Diensten des Mobilfunknetzes, vorzugsweise Sprachtelefonie, Videotelefonie, SMS, MMS, E-Mail, Chatdiensten, Konferenzdiensten, Instant Messaging und/oder dergleichen Mobilfunknetzdiensten zwischen Mobilfunknetzteilnehmern und Rechnernetznutzern in beiden Kommunikationsrichtungen, dass heißt vom Rechnernetz zum Mobilfunknetz einerseits und vom Mobilfunknetz zum Rechnernetz andererseits. Erfindungsgemäß wird damit ein Kommunikationssystem bereitgestellt, welches es einem Teilnehmer eines Mobilfunknetzes ermöglicht, mit einem Nutzer eines Rechnernetzes, vorzugsweise des weltweiten Internets, zu kommunizieren, wobei dabei vorteilhafterweise alle im jeweiligen Mobilfunknetz implementierten Sprach- Bild- und Textkommunikationsdienste transparent unterstützt und über das Rechnernetz, vorzugsweise dem Internet, verfügbar gemacht werden, vorzugsweise Dienste wie Sprachtelefonie, Videotelefonie, SMS, MMS, E-Mail, Chatdienste, Konferenzdienste, Instant Messaging und/oder dergleichen Mobilfunknetzdienste. Kommunikationsverbindungen zum Austausch von Informationen wie Sprache und/oder Daten sind dabei erfindungsgemäß sowohl von einem Mobilfunknetzteilnehmer als auch von einem Rechnernetznutzer aufbaubar.

Der Zugang zu dem erfindungsgemäßen Kommunikationssystem und Kommunikationsdienste in diesem über das Mobilfunknetz des Kommunikationssystems von einem in dem Mobilfunknetz betreibbaren mobilen Endgerät aus erfolgen vorteilhafterweise in der gleichen Art und Weise wie bei einer Kommunikation in dem Mobilfunknetz mit einem anderen Mobilfunkteilnehmer. Der ein im Mobilfunknetz betreibbares mobiles Endgerät nutzende Teilnehmer des Kommunikationssystems tritt dabei vorteilhafterweise unter Verwendung eines im Mobilfunknetz betreibbaren mobilen Endgerätes über das Mobilfunknetz, dem sogenannten Heimatnetz oder einem sogenannten Roamingnetz, mit dem Kommunikationssystem in Verbindung.

Der Zugang zum Kommunikationssystem und die Kommunikation in diesem erfolgen dabei vorteilhafterweise in der gleichen Art und Weise wie bei einem Zugang der Kommunikation im beziehungsweise über das Mobilfunknetz mit einem anderen über das Mobilfunknetz erreichbaren Teilnehmer, insbesondere Mobilfunkteilnehmer und/oder Festnetzteilnehmer. Vorteilhafterweise tritt der Rechnernutzer als Teilnehmer des Rechnernetzes mit dem erfindungsgemäßen Kommunikationssystem unter Verwendung eines geeigneten Datenendgerätes, vorzugsweise einem PC, einem Laptop, einem PDA, einem Smartphone oder dergleichen Datenendeinrichtung des Rechnernetzes, vorzugsweise des Internets, über einen drahtgebundenen und/oder drahtlosen Rechnernetzzugang in Verbindung. Der Teilnehmer kann dabei auch zu einem Teilnehmer des Mobilfunknetzes Kontakt aufnehmen. Dabei kann von dem zentralen Nutzerregister eine Mobilfunknetzrufnummer die dem Teilnehmer zugeordnet ist erfragt werden und zur Identifizierung des anrufenden Teilnehmers im Mobilfunknetz verwendet werden. In einer bevorzugten Ausführungsform der Erfindung wird auch einem Teilnehmer der kein Mobilfunknetzteilnehmer ist und daher keine Mobilfunknetzrufnummer besitzt, eine Mobilfunknetznummer für Identifikationszwecke zugewiesen und seitens seiner Identität gespeichert.

Bei Nutzung des Internets als Rechnernetz ist vorteilhafterweise ein weltweiter Zugang zu dem erfindungsgemäßen Kommunikationssystem gegeben. Eine bevorzugte Ausgestaltung der Erfindung sieht einen Internetzugang über beliebige Internet-Zugangs-Provider und/oder beliebige Internet-Service-Provider vor.

Darüber hinaus kann es einem Teilnehmer der über ein Internet mit dem Kommunikationsnetz verbunden ist möglich sein, auf alle Dienste des zellularen Mobilfunknetzes zuzugreifen. Dies umfasst auch Dienste die nicht zur Kommunikation zwischen zwei Teilnehmern dienen, sondern auch Dienste bei denen beispielsweise auf einen Server des Mobilfunknetzes oder auf einen Server der mit dem Mobilfunknetz verbunden ist zugegriffen wird.

In einer weiteren vorteilhaften Ausgestaltung der Erfindung greift der Mobilfunkteilnehmer unter Verwendung eines im Mobilfunknetz betreibbaren mobilen Endgerätes über einen beliebigen Internetzugang und/oder Internet-Service-Provider auf das erfindungsgemäße Kommunikationssystem zu und kann dabei mit anderen Mobilfunk- und/oder Festnetrteilnehmern sowie Internetnutrern mit beziehungsweise unter seiner erfindungsgemäßen Identität und/oder unter seiner Mobilfunknetzidentität, vorzugsweise der Mobilfunknetzrufnummer (MSISDN) kommunizieren.

Eine weitere vorteilhafte Ausgestaltung der Erfindung sieht vor, dass zumindest ein Teil der Identität für den Aufbau einer Kommunikationsverbindung zwischen einem mobilen Endgerät eines Teilnehmers im Mobilfunknetz und einer Datenendeinrichtung eines Teilnehmers im Rechnernetz nutzbar ist. Erfindungsgemäß weist die eindeutige Teilnehmeridentität dazu einen zur Identifizierung des Teilnehmers im Mobilfunknetz dienenden Bestandteil und/oder einen den Teilnehmer im Rechnernetz identifizierenden Bestandteil auf.

Eine weitere vorteilhafte Ausgestaltung der Erfindung sieht vor, dass zumindest ein Teil der Identität für den Aufbau einer Kommunikationsverbindung zwischen einem im Mobilfunknetz erreichbaren mobilen Endgerät eines Teilnehmers und einer im Rechnernetz erreichbaren Datenendeinrichtung eines Teilnehmers nutzbar ist. Erfindungsgemäß weist die Identität des jeweiligen Teilnehmers dazu wenigstens eine Information, vorzugsweise eine Statusinformation, über die Erreichbarkeit des Teilnehmers im jeweiligen Netz des Kommunikationssystems, also dem Mobilfunknetz einerseits und dem Rechnernetz andererseits, auf. Die Erreichbarkeitsinformation eines Teilnehmers des Mobilfunknetzes im Rechnernetz wird dazu vorteilhafterweise von diesem bei Einbuchung in das Rechnernetz seitens des Nutzerregisters in und/oder im Zusammenhang mit der Identität des Teilnehmers hinterlegt. Will ein anderer Teilnehmer des erfindungsgemäßen Kommunikationssystems und/oder ein Teilnehmer eines mit dem Mobilfunknetz des erfindungsgemäßen Kommunikationssystems verbundenen beziehungsweise verbindbaren Mobilfunknetzes, Festnetzes oder Rechnernetzes und/oder eines mit dem Rechnernetz des erfindungsgemäßen Kommunikationssystems verbundenen beziehungsweise verbindbaren Mobilfunknetzes, Festnetzes oder Rechnernetzes den Teilnehmer unter seiner Mobilfunknetzrufnummer zu Kommunikationszwecken erreichen, wird unter Nutzung des zentralen Nutzerregisters und/oder einer mit diesem verbundenen, den Präsenzstatus des Teilnehmer verwaltenden Recheneinrichtung (Presence-Server) die Kommunikationsverbindung entsprechend vom Mobilfunknetz des erfindungsgemäßen Kommunikationssystems aus in das Rechnernetz des erfindungsgemäßen Kommunikationssystems weitergeleitet beziehungsweise geroutet.

In einer weiteren vorteilhaften Ausgestaltung der Erfindung ist zumindest ein Teil der Identität eines Teilnehmers für eine von einer Datenendeinrichtung des Rechnernetzes aus initiierten Anforderung zum Aufbau einer Kommunikationsverbindung mit einem mobilen Endgerät des Teilnehmers im Mobilfunknetz nutzbar. Eine weitere Ausgestaltung der Erfindung sieht vor, dass zumindest ein Teil der Identität eines Teilnehmers für eine von einem mobilen Endgerät des Mobilfunknetzes aus initiierten Anforderung zum Aufbau einer Kommunikationsverbindung mit einer Datenendeinrichtung des Teilnehmers im Rechnernetz nutzbar ist. Die erfindungsgemäßen Ausgestaltungen der Identität ermöglichen vorteilhafterweise eine weitere Verbesserung des Informationsaustausches zwischen den Netzen des erfindungsgemäßen Kommunikationssystems, dem Mobilfunknetz einerseits und dem Rechnernetz andererseits, insbesondere da das zentrale Nutzerregister des erfindungsgemäßen Kommunikationssystems so die Identitäten eines Teilnehmers vom Rechnernetz ins Mobilfunknetz beziehungsweise vom Mobilfunknetz ins Rechnernetz überführt beziehungsweise überführbar macht.

Vorteilhafterweise ist zumindest ein Teil der Identität eines Teilnehmers im Kommunikationssystem im Rahmen des Aufbaues einer Kommunikationsverbindung seitens wenigstens einer Verwaltungseinrichtung des Mobilfunknetzes und/oder seitens wenigstens einer Verwaltungseinrichtung des Rechnernetzes nutzbar, vorzugsweise durch Abfrage des zentralen Nutzerregisters.

Eine weitere vorteilhafte Ausgestaltung der Erfindung ist gekennzeichnet durch eine Übergangseinheit, einem sogenannten (Gateway) zur Kopplung des Mobilfunknetzes mit dem Rechnernetz für den Informationsaustausch.

Vorteilhafterweise weist die erfindungsgemäße Identität wenigstens eines der folgenden Elemente auf: Eine weltweit eindeutige Information zur Identifikation des Teilnehmers, vorzugsweise eine SIP-Identity (SIP: Session Initiation Protocol), wenigstens eine Zugangskennung, vorzugsweise eine beziehungsweise die SIP-Identity, wenigstens eine Adresse gemäß einem seitens des Rechnernetzes genutzten Protokolls, ein Passwort zur Ermöglichung eines Zugangs zum Rechnernetz, wenigstens eine dem ein im Mobilfunknetz betreibbares mobiles Endgerät nutzenden Teilnehmer zugeordnete netzspezifische Mobilfunknetz-Rufnummer (MSISDN), wenigstens eine dem eine Datenendeinrichtung des Rechnernetzes nutzenden Teilnehmer zumindest temporär zuordbare netzspezifische Mobilfunknetz-Rufnummer, wenigstens eine Information, vorzugsweise eine Statusinformation, über die Erreichbarkeit eines Teilnehmers im Mobilfunknetz und/oder im Rechnernetz und/oder wenigstens eine Information, vorzugsweise eine Statusinformation, über den Aufenthaltsort eines Teilnehmers im Mobilfunknetz und/oder im Rechnernetz auf.

Erfindungsgemäß führt dabei ein netzübergreifendes zentrales Nutzerregister seitens des erfindungsgemäßen Kommunikationssystems implementiert, in dem für jeden Teilnehmer des Kommunikationssystems die genannten Informationen zur Identität und/oder zur Erreichbarkeit beziehungsweise zum Aufenthalt des Teilnehmers erfasst sind. Die Statusinformationen hinsichtlich der Erreichbarkeit und/oder des Aufenthaltsorts des Teilnehmers kennzeichnen dabei vorteilhafterweise ob ein Teilnehmer aktuell im Kommunikationssystem eingebucht und/oder erreichbar ist und ob er sich im Mobilfunknetz des Kommunikationssystems und/oder im Rechnernetz des Kommunikationssystems befindet. Bei Nutzung des Internets als Rechnernetz wird dabei vorteilhafterweise die aktuelle IP-Adresse bei der Einbuchung und/oder Erreichbarkeit des Teilnehmers im Internet erfasst.

Eine besonders vorteilhafte Ausgestaltung der Erfindung sieht vor, dass das Nutzerregister und/oder die Einrichtungen zur Erfassung der Erreichbarkeit und/oder des Aufenthalts eines Teilnehmers im Kommunikationssystems Bestandteil eines IP-Multimedia-Subsystems (IMS) ist.

Eine weitere besonders vorteilhafte Ausgestaltung der Erfindung ist gekennzeichnet durch eine Implementierung von Protokoll- mechanismen im Mobilfunknetz zur Registrierung eines Mobilfunkteilnehmers im Nutzerregister des erfindungsgemäßen Kommunikationssystems bei Buchung und/oder Nutzung eines netzübergreifenden Kommunikationsdienstes mit der Teilnehmeridentität, vorzugsweise bei Nutzung der Nutzeridentität (SIP-Identity), der netzspezifischen Mobilfunknetz-Rufnummer, der Rechnernetz-Zugangskennung und dem Passwort zur Ermöglichung eines Zugangs zum Rechnernetz.

Eine weitere besonders vorteilhafte Ausgestaltung der Erfindung ist gekennzeichnet durch eine Implementierung von Protokollmechanismen im Mobilfunknetz zur Anmeldung eines Mobilfunkteilnehmers seitens des erfindungsgemäßen Kommunikationssystems im Nutzerregister und/oder einem sogenannten Presence-Servers beim Einschalten und/oder beim Einbuchen des mobilen Endgerätes des Teilnehmers in das Mobilfunknetz, vorzugsweise durch SIP-Protokolle in einem IP-Multimedia-Subsystem (IMS).

Eine weitere Ausgestaltung des erfindungsgemäßen Kommunikationssystems sieht ein Rechnernetz-Zugangs-Server und ein Rechnernetz-Portal zur Registrierung eines Rechnernetznutzers im Nutzerregister des erfindungsgemäßen Kommunikationssystems bei Buchung und/oder Nutzung eines netzübergreifenden Kommunikationsdienstes eines Teilnehmers mit der jeweiligen Teilnehmeridentität, vorzugsweise der SIP-Identity, der Zugangskennung zum Rechnernetz und dem Passwort zur Ermöglichung des Zugangs zum Rechnernetz.

Eine weitere Ausgestaltung der Erfindung sieht einen Rechnernetz-Zugangs-Server und einen Rechnernetz-Portal zur Anmeldung eines Rechnernetznutzers seitens des Nutzerregisters des erfindungsgemäßen Kommunikationssystems und/oder seitens eines sogenannten Presence-Servers des erfindungsgemäßen Kommunikationssystem zur entsprechenden Speicherung der aktuellen Adresse des jeweiligen Teilnehmers im Rechnernetz, vorzugsweise der aktuellen IP-Adresse im Internet.

Bei dem erfindungsgemäßen Verfahren gemäß anspruch 18 zum Austausch von Informationen zwischen in einem zellularen Mobilfunknetz betreibbaren mobilen Endgeräten, gemäß dem GSM- und/oder UMTS-Funknetzstandard, und/oder Datenendeinrichtungen eines Rechnernetzes, in einem erfindungsgemäßen Kommunikationssystem gemäß den Anspruchen 1-17 wird die Identität eines Teilnehmers des Kommunikationssystems für den Aufbau einer Kommunikationsverbindung zum Austausch von Informationen, zwischen dem mobilen Endgerät und/oder der Datenendeinrichtung des jeweiligen Teilnehmers genutzt.

Bei einer weiteren vorteilhaften Ausgestaltung des erfindungsgemäßen Verfahrens wird die Identität eines ein mobiles Endgerät nutzenden Teilnehmers des Kommunikationssystems zumindest teilweise für eine von einer Datenendeinrichtung aus initiierten Anforderung zum Aufbau einer Kommunikationsverbindung zum Austausch von Informationen, vorzugsweise Sprache und/oder Daten, mit dem mobilen Endgerät genutzt.

In einer weiteren vorteilhaften Ausgestaltung des erfindungsgemäßen Verfahrens wird die Identität eines eine Datenendeinrichtung nutzenden Teilnehmers des Kommunikationssystems für eine von einem mobilen Endgerät aus initiierten Anforderung zum Aufbau einer Kommunikationsverbindung zum Austausch von Sprache und/oder Daten umfassenden Informationen, mit der Datenendeinrichtung genutzt.

Vorteilhafterweise wird die Identität zumindest im Rahmen des Aufbaus einer Kommunikationsverbindung aus dem zentralen Nutzerregister des Kommunikationssystems abgefragt, vorzugsweise von einer Vermittlungseinrichtung des Mobilfunknetzes und/oder einer Vermittlungseinrichtung des Rechnernetzes.

Bei abgehenden Kommunikationsdiensten von einem Internet-Portal aus fragt der entsprechende Internet-Zugangs-Server die Mobilfunknetzrufnummer des Teilnehmers im Nutzerregister aus der Identität des Teilnehmers im Kommunikationssystem ab und leitet den entsprechenden Dienst für eine Übergangseinheit (Gateway) unter Nutzung der entsprechenden Mobilfunknetzrufnummer in das Mobilfunknetz weiter. Bei der Nutzbarkeit von Präsenzinformationen hinsichtlich Erreichbarkeit, Status und/oder Aufenthaltsort eines Teilnehmers im Mobilfunknetz erfolgt eine entsprechende Bestimmung und/oder Weiterleitung der Mobilfunknetzrufnummer des Teilnehmers im Mobilfunknetz. Die Erreichbarkeit wird dabei dem vom Internet-Portal aus anfragenden Kommunikationsdienst entsprechend geeignet signalisiert.

Bei ankommenden Kommunikationsdiensten und Nicht-Erreichbarkeit eines Teilnehmers des Kommunikationssystems im Mobilfunknetz wird der entsprechende Presence-Status (Presence-Status) des Teilnehmers im Nutzerregister unter Nutzung der Identität abgefragt. Bei Erreichbarkeit des Teilnehmers des Kommunikationssystems im Rechnernetz wird die entsprechende Adresse der Erreichbarkeit im Rechnernetz bestimmt und dem ankommenden Kommunikationsdienst signalisiert. Über eine Übergangseinheit (Gateway) wird der Dienst dann über das Rechnernetz zu dem jeweiligen Teilnehmer geleitet (geroutet).

Erfindungsgemäß wird vor der Initiierung des Aufbaus der Kommunikationsverbindung die Erreichbarkeit und/oder der Aufenthaltsort des mobilen Endgerätes im Mobilfunknetz und/oder die Erreichbarkeit und/oder der Aufenthaltsort der Datenendeinrichtung im Rechnernetz bestimmt, vorzugsweise durch Abfrage oder Ermittlung der Statusinformation aus der Identität des Teilnehmers.

In einer weiteren besonders vorteilhaften Ausgestaltung der Erfindung erfolgt die Bestimmbarkeit der Erreichbarkeit und/oder des Aufenthaltsorts durch einen vorgezogenen Endgerätesuchruf, sogenanntes Prepaging.

In einer weiteren vorteilhaften Ausgestaltung der Erfindung wird der Datenendeinrichtung für die Kommunikationsverbindung seitens des Mobilfunknetzes eine zumindest temporär nutzbare netzspezifische Mobilfunknetz-Rufnummer zugeordnet, wobei die Zuordnung seitens des zentralen Nutzerregisters des Kommunikationssystems, seitens einer Verwaltungseinrichtung des Mobilfunknetzes und/oder seitens einer Verwaltungseinrichtung des Rechnernetzes im Rahmen der Initiierung des Aufbaus der Kommunikationsverbindung erfolgt und seitens der Identität des Teilnehmers im Nutzerregister des Kommunikationssystems erfasst wird.

Zur Verbesserung der Verfügbarkeit der Mobilfunknetzdienste zwischen Teilnehmern des Mobilfunknetzes und Teilnehmern des Rechnernetzes, vorzugsweise Mobilfunknetzteilnehmern und Internetnutzern, in beiden Kommunikationsrichtungen, dass heißt vom Internet zum Mobilfunknetz und vom Mobilfunknetz zum Internet, sind seitens des erfindungsgemäßen Kommunikationssystems zwischen den Vermittlungseinrichtungen des Mobilfunknetzes, vorzugsweise zwischen den sogenannten MSCs und/oder SGSNs beziehungsweise GGSNs im Falle eines Mobilfunknetzes gemäß dem GSM- und/oder UMTS-Funknetzstandard und den entsprechenden Übergabepunkten zum Rechnernetz, vorzugsweise dem Internet, wenigstens eine Übergangseinheit (Gateway) implementiert, welches die seitens des Mobilfunknetzes implementierten Sprach-, Bild- und/oder Textkommunikationsdienste, vorzugsweise Sprachtelefonie, Videotelefonie, SMS, MMS, E-Mail, Instant Messaging und dergleichen Mobilfunknetzdienste, in entsprechende IP-basierte Dienste umwandeln und umgekehrt entsprechende IP-basierte Dienste in Dienste des Mobilfunknetzes umwandeln. Bei IP-basierten Mobilfunkdiensten, vorzugsweise IMS-Diensten, erfolgt die Verbindung zwischen dem Mobilfunknetz und dem Internet vorteilhafterweise auf direktem Wege ohne Nutzung von Übergangseinheiten (Gateways).

Seitens der Datenendeinrichtungen des Nutzers beziehungsweise Teilnehmers eines Rechnernetzes, vorzugsweise seitens der Datenendeinrichtung eines Internetnutzers, werden die entsprechenden IP-basieren Dienste durch ein entsprechend ausgebildetes Anwendungsprogramm (Client-Software) verfügbar gemacht und entsprechend wiedergegeben. Dabei kommt vorteilhafterweise die seitens der Datenendeinrichtung des Nutzers vorhanden Benutzerschnittstellen zur Ein- und Ausgabe von Informationen zum Einsatz, insbesondere ein graphischer Bildschirm, Lautsprecher, Mikrofon, Tastatur und/oder dergleichen Ein- und Ausgabeeinrichtungen der Datenendeinrichtung des Nutzers.

Die Weiterleitung der Dienste über die Übergangseinheiten (Gateways) in das Rechnernetz, vorzugsweise das Internet, beziehungsweise in umgekehrter Richtung aus dem Rechnernetz in das Mobilfunknetz, erfolgt vorteilhafterweise unter Nutzung der im Nutzerregister erfassten und von dort abgefragten IP-Adresse der Datenendeinrichtung des Nutzers und/oder der Mobilfunknetz-Rufnummer des entsprechend adressierten Nutzers beziehungsweise Teilnehmers im Mobilfunknetz.

Zur Verbesserung des Dienstezugangs und der Kommunikation über das Mobilfunknetz des erfindungsgemäßen Kommunikationssystems von einem mobilen Endgerät eines Teilnehmers aus ermöglichen die Übergangseinheiten (Gateways), dass ankommende und/oder abgehende Dienste sich für den im Mobilfunknetz befindlichen Teilnehmer des erfindungsgemäßen Kommunikationssystems im Mobilfunknetz wie Dienste von und/oder zu anderen Mobilfunkteilnehmern des Mobilfunknetzes, welche nicht seitens des erfindungsgemäßen Kommunikationssystems im Nutzerregister mit einer Identität erfasst sind, darstellen, insbesondere auch dann, wenn der andere Mobilfunkteilnehmer und/oder Internetnutzer über das Internet auf das Mobilfunknetz des erfindungsgemäßen Kommunikationssystems zugreift beziehungsweise über dieses seitens desselben erreicht wird. Bei seitens des erfindungsgemäßen Kommunikationssystems realisierten abgehenden Diensten von einer Datenendeinrichtung eines Rechnernetzes aus, bei der der Teilnehmer kein Teilnehmer des Mobilfunknetzes mit einer entsprechenden Mobilfunknetz-Rufnummer ist, erfolgt für IP-basierte Dienste seitens des Mobilfunkendgerätes eine Anwahl des von einem Teilnehmer gewünschten Teilnehmers seitens des Rechnernetzes, vorzugsweise einem Internetnutzer, über die Identität, vorzugsweise unter Nutzung der SIP-Identity unter Nutzung entsprechender seitens des mobilen Endgerätes des Mobilfunknetzteilnehmers des erfindungsgemäßen Kommunikationssystems laufenden beziehungsweise ausgeführten Anwendungsprogramms, vorzugsweise einer SIP- und/oder IMS-Client-Software. Vorteilhafterweise wird dem Teilnehmer des Rechnernetzes, vorzugsweise dem Internetnutzer, dabei eine eindeutige zumindest temporär gültige Mobilfunknetzrufnummer (Pseudo-Mobilfunknetzrufnummer) seitens der im Nutzerregister des Kommunikationssystems erfassten Identität des Teilnehmers zugeordnet, über die der Teilnehmer beziehungsweise Nutzer des Rechnernetzes vom mobilen Endgerät eines im Mobilfunknetz sich aufhaltenden Teilnehmers entsprechend einer regulären Mobilfunknetzrufnummer erreicht werden kann.

In einer weiteren vorteilhaften Ausgestaltung der Erfindung werden Präsenz Informationen hinsichtlich Erreichbarkeit, Status und/oder Aufenthaltsort eines Teilnehmers im Mobilfunknetz und/oder Rechnernetz von einer mit dem zentralen Nutzerregister des Kommunikationssystems verbindbaren zentralen Presence Verwaltungseinrichtung, vorzugsweise einem sogenannten zentralen Presence-Server des Mobilfunknetzes und/oder des Rechnernetzes realisiert. Die seitens der entsprechenden Presence-Server erfassten beziehungsweise gespeicherten Presence-Informationen hinsichtlich Erreichbarkeit, Status und/oder Aufenthaltsort werden dabei durch entsprechende Protokolle zwischen den jeweiligen Presence-Servern des Mobilfunknetzes und/oder des Rechnernetzes untereinander aktualisiert. Vorteilhafterweise ist das zentrale Nutzerregister mit den jeweiligen Presence-Servern unter Nutzung der entsprechenden Identität des Teilnehmers im Kommunikationssystem verbindbar. In einer weitern Ausgestaltung der Erfindung sind verschiedene dezentrale Presence-Server realisiert, die untereinander und/oder über das Nutzerregister für einen gegenseitigen Abgleich beziehungsweise Austausch von Presence-Informationen verbindbar sind, vorzugsweise unter Nutzung eines sogenannten IMS-Roamings. Eine weitere vorteilhafte Ausgestaltung der Erfindung sieht vor, dass die dezentralen Presence-Server in unterschiedlichen Mobilfunknetzen und/oder Bereichen des Rechnernetzes, vorzugsweise Interdomains, implementiert sind.

Durch das zentrale Nutzerregister des erfindungsgemäßen Kommunikationssystems wird vorteilhafterweise eine das Mobilfunknetz und das Rechnernetz übergreifende Roaming-Funktionalität realisiert.

Ein Teilnehmer der in das Mobilfunknetz eingebucht ist kann also sowohl über seine Mobilfunknetzrufnummer als auch über seine Rechnernetzadresse erreicht werden. Ebenso kann ein Teilnehmer sich im Rechnernetz anmelden. Seine Erreichbarkeit im Rechnernetz wird dann an das zentrale Nutzerregister gemeldet und der Teilnehmer ist dann wieder sowohl über seine Rechnernetzadresse als auch über seine Mobilfunknetzrufnummer erreichbar.

Vorteilhafterweise wird in einer weiteren Ausgestaltung der Erfindung diese Roaming-Funktionalität durch eine netzübergreifende, insbesondere Mobilfunknetz- und Rechnernetz- übergreifende Handover-Funktionalität ergänzt. Vorteilhafterweise wird dabei ein Rechnernetz-Handover, vorzugsweise ein Internet-Domaen-Handover erzielt. Dadurch kann vorteilhafterweise der Netzzugang seitens des erfindungsgemäßen Kommunikationssystems, also der Zugang zu dem Kommunikationssystem über das Mobilfunknetz während einer bestehenden Kommunikationsverbindung und/oder Sitzung geändert werden, ohne dass die Kommunikationsverbindung und/oder -sitzung dabei abgebrochen und/oder neu aufgebaut werden muss.

Der Wechsel des Zugangs zum erfindungsgemäßen Kommunikationssystem über das Mobilfunknetz oder das Rechnernetz erfolgt dabei vorteilhafterweise zumindest quasi unterbrechungsfrei unter Verwendung des gleichen Endgerätes des jeweiligen Teilnehmers, also entweder des mobilen Endgerätes und/oder der Datenendeinrichtung des Teilnehmers, oder unter Wechsel des Endgerätes des jeweiligen Teilnehmers.

Bei Beibehaltung des Endgerätes des Teilnehmers, also des quasi unterbrechungsfreien Wechsels des Zugangs zum erfindungsgemäßen Kommunikationssystem, wird durch ein Handover beziehungsweise Mobilitätsverfahren der Zugangswechsel realisiert. Dabei wird vorteilhafterweise ein sogenannter UMA-Server im Mobilfunknetz und eine UMA-Client-Software seitens des jeweiligen Teilnehmerendgerätes im Falle eines im Mobilfunknetz betreibbaren mobilen Endgerätes als Teilnehmerendgerät oder ein Mobile-IP-Server im Rechnernetz, vorzugsweise dem Internet, und eine Mobile-IP-Client-Software seitens des Teilnehmerendgerätes, also einer Datenendeinrichtung des Rechnernetzes, genutzt. Das jeweilige Teilnehmerendgerät unterstützt dabei vorteilhafterweise den physikalischen Netzzugang zu den beiden Netzen des erfindungsgemäßen Kommunikationssystems, also einen Zugang zum Mobilfunknetz, vorzugsweise über GSM- und/oder UMTS-Funknetzstandard, sowie den Rechnernetzzugang, vorzugsweise über einen drahtlosen IP-Zugang mittels Bluetooth oder WLAN. Erfolgt ein Wechsel des Zugangs zum erfindungsgemäßen Kommunikationssystem durch ein Wechsel des jeweiligen Endgerätes des Teilnehmers, wird vorteilhafterweise ein sogenanntes Session-Mobility-Verfahren eingesetzt, vorzugsweise eine sogenannte SIP-Session-Mobility in einem IMS-System. Dabei muss sich der jeweilige Teilnehmer neu anmelden und im Rahmen der Neuanmeldung des Teilnehmers in dem jeweiligen Netz des erfindungsgemäßen Kommunikationssystems, also dem Mobilfunknetz einerseits und dem Rechnernetz andererseits, wird dem gewechselten, also neuen Endgerät die zuvor von dem Teilnehmer genutzte Kommunikationsverbindung beziehungsweise laufende Sitzung wieder transparent aufgenommen und fortgesetzt.

Weitere Einzelheiten, Merkmale und Vorteile der Erfindung werden nachfolgend anhand des in der Figur der Zeichnung dargestellten Ausführungsbeispiels näher erläutert. Dabei zeigt:

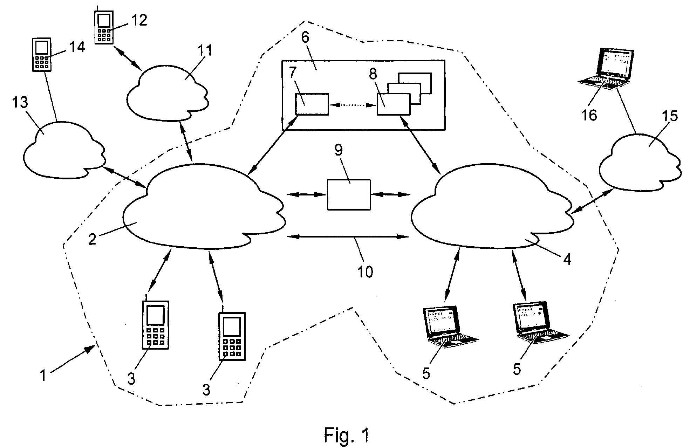

- Fig. 1: in einer schematischen Prinzipdarstellung ein erfindungsgemäßes Kommunikationssystem.

Fig. 1 zeigt ein Kommunikationssystem 1, bestehend aus einem zellularen Mobilfunknetz 2 mit darin betreibbaren mobilen Endgeräten 3 und einem Rechnernetz 4 mit Datenendeinrichtungen 5. Seitens des Mobilfunknetzes 2 und der darin betreibbaren mobilen Endgeräte 3 werden Informationen unter Nutzung wenigstens Protokolls des Mobilfunknetzes, vorliegend gemäß dem GSM- und/oder UMTS-Funknetzstandard, übertragen. Seitens des Internets 4 und den Datenendeinrichtungen 5 werden Informationen unter Nutzung wenigstens eines Protokolls des Internets, vorliegend mittels TCP-IP übertragen.

Das Kommunikationssystem 1 weist ein zentrales Nutzerregister 6 auf, in dem für jeden Teilnehmer des Kommunikationssystems 1, vorliegend den Nutzern der in Mobilfunknetz 2 betreibbaren mobilen Endgeräte 3, vorliegend Mobilfunktelefonen, und der Datenendeinrichtung 5 des Internets 4, vorliegend PCs oder Laptops, eine eindeutige Identität erfasst ist. Die Identität ist dabei derart ausgebildet, dass diese einen einheitlichen Informationsaustausch zwischen dem Mobilfunknetz 2 und dem Internet 4 als Rechnernetz 4 ermöglicht. Die seitens des in Fig. 1 symbolisch dargestellten zentralen Nutzerregisters 6 des Kommunikationssystems 1 erfasste Identität umfasst vorliegend eine weltweit eindeutige Nutzeridentität in Form einer SIP-Identity, eine Zugangskennung, vorliegend gegeben durch die SIP-Identity, ein Passwort für ein Zugang zum Internet 4, eine Mobilfunknetz-Rufnummer (MSISDN) für Teilnehmer 3 des Mobilfunknetzes 2, eine optionale eindeutige temporäre Mobilfunknetz-Rufnummer für Teilnehmer 5 des Internets 4 und Presence-Status-Informationen, die Kennzeichen, ob ein Teilnehmer 3 beziehungsweise 5 aktuell im Kommunikationssystem 1 eingebucht und erreichbar ist, insbesondere ob sich dieser im Mobilfunknetz 2 oder im Internet 2 befindet, sowie die aktuelle IP-Adresse bei Einbuchung und/oder Erreichbarkeit eines Teilnehmers 5 im Internet.

Zur Verwaltung und Bereitstellung der Presence-Statusinformationen weist das zentrale Nutzerregister 6 des Kommunikationssystem 1 vorliegend Verbindungen zu entsprechende Statusinformationen erfassenden und verwaltenden Recheneinrichtungen, sogeannten Presence-Servern 7 und 8 des Mobilfunknetzes 2 und des Internets 4 auf, welche miteinander zum entsprechenden Informationsaustausch beziehungsweise zur entsprechenden Adaptierung der Informationen in den jeweiligen Netzen des Kommunikationssystems 1, also dem Mobilfunknetz 2 oder dem Internet 4 datenaustauschend verbindbar sind.

Die weiter im Aufbau und/oder der Aufrechterhaltung einer Kommunikationsverbindung zwischen Teilnehmern 3 des Mobilfunknetzes 2 und Teilnehmern 5 des Internets 4 beteiligten Einrichtungen des Mobilfunknetzes 2 beziehungsweise des Internets 4 für IP-basierte Mobilfunknetzdienste mit einer direkten Kommunikationsverbindung 10 verbunden und bei Mobilfunknetzen wie Sprachtelefonie, Videotelefonie, SMS, MMS und dergleichen Mobilfunknetzdienste über ein Gateway 9 als Übergangseinheit verbunden. Das Gateway 9 übernimmt dabei eine Adaptierung beziehungsweise Umsetzung der entsprechenden Dienste vom Mobilfunknetz 2 verarbeiteten Formaten im vom Internet 4 verarbeitbaren Formaten.

Wie in Fig. 1 weiter dargestellt, ist das Mobilfunknetz 2 des Kommunikationssystems 1 mit anderen Mobilfunknetzen 9 und darin betreibbaren mobilen Endgeräten 12, Festnetzen 13 und darin angeschlossenen Endgeräten 14 und das Internet 4 mit Festnetzen 15 und darin angeschlossenen Endgeräten 16 koppelbar. Teilnehmer 3 und 5 des Kommunikationssystems 1 können so von anderen Teilnehmern 12, 14 oder 16 erreicht werden beziehungsweise diese über die jeweiligen Netze des Kommunikationssystems, also das Mobilfunknetz 2 und das Internet 4 mit den jeweiligen Identitäten des Mobilfunknetzes 2 beziehungsweise des Internets 4 erreicht werden beziehungsweise diese erreichen.

Das in der Fig. der Zeichnung dargestellte Ausführungsbeispiel dient lediglich der Erläuterung der Erfindung und ist für diese nicht beschränkend.

### Bezugszeichenliste

- 1: Kommunikationssystem
- 2: Mobilfunknetz
- 3: mobiles Endgerät/Mobilfunktelefon
- 4: Rechnernetz/Internet
- 5: Datenendeinrichtung/Rechner
- 6: zentrales Nutzerregister
- 7: Presence-Server Mobilfunknetz (2) (zentrales Nutzerregister (6))
- 8: Presence-Server Rechnernetz/Internet (4) (zentrales Nutzerregister (6))
- 9: Übergangseinheit/Gateway (Kopplung Mobilfunknetz (2) mit Internet (4))
- 10: Kommunikationsverbindung (Direktkopplung Mobilfunknetz (2) mit Internet (4))
- 11: Mobilfunknetz
- 12: mobiles Endgerät (Mobilfunknetz (9))
- 13: Festnetz
- 14: Endgerät (Festnetz (11)
- 15: Festnetz
- 16: Endgerät (Festnetz (13)

## Patentansprüche

1. Kommunikationssystem (1) bestehend aus einem zellularen Mobilfunknetz (2) mit darin betreibbaren mobilen Endgeräten (3) gemäß dem GSM- und/oder UMTS-Funknetzstandard, einem Rechnernetz (4) mit Datenendeinrichtungen (5) **und einem zentralen Nutzerregister (6) in dem für jeden Teilnehmer (3, 5) des Kommunikationssystems (1) eine eindeutige Identität erfasst ist, welche einen Informationsaustausch zwischen dem Mobilfunknetz (2) und dem Rechnernetz (4) ermöglicht,** wobei Informationen im Mobilfunknetz (2) unter Nutzung wenigstens eines Protokolls des Mobilfunknetzes (2) und Informationen im Rechnernetz (4) unter Nutzung wenigstens eines Protokolls des Rechnernetzes (4) übertragen werden, **dadurch gekennzeichnet, dass das zentrale Nutzerregister (6) eine Verwaltung und Bereitstellung von Präsenzinformationen von Teilnehmern (3, 5) hinsichtlich deren Erreichbarkeit, Status und/oder Aufenthaltsort im Mobilfunknetz (2) und/oder im Rechnernetz (4) erlaubt.**

2. Kommunikationssystem (1) nach Anspruch 1, **dadurch gekennzeichnet, dass zumindest ein Tell der** Identität für den Aufbau einer Kommunikationsverbindung zwischen einem mobilen Endgerät (3) eines Teilnehmers im Mobilfunknetz (2) und einer Datenendeinrichtung (5) eines Teilnehmers im Rechnernetz (4) nutzbar ist.

3. Kommunikationssystem (1) nach Anspruch 1 oder Anspruch 2, **dadurch gekennzeichnet, dass zumindest ein Tell** der Identität für den Aufbau einer Kommunikationsverbindung zwischen einem Im Mobilfunknetz (2) erreichbaren mobilen Endgerät (3) eines Teilnehmers und einer im Rechnernetz (4) erreichbaren Datenendeinrichtung (5) eines Teilnehmers nutzbar ist.

4. Kommunikationssystem (1) nach Anspruch 2 oder Anspruch 3, **dadurch gekennzeichnet, dass zumindest ein Tell der** Identität eines Teilnehmers für eine von einer Datenendeinrichtung (5) des Rechnernetzes (4) aus Initiierten Anforderung zum Aufbau einer Kommunikationsverbindung mit einem mobilen Endgerät (3) des Teilnehmers im Mobilfunknetz (2) nutzbar ist.

5. Kommunikationssystem (1) nach Anspruch 2 oder Anspruch 3, **dadurch gekennzeichnet, dass zumindest ein Tell der** Identität eines Teilnehmers für eine von einem mobilen Endgerät (3) des Mobilfunknetzes (2) aus initiierten Anforderung zum Aufbau einer Kommunikationsverbindung mit einer Datenendeinrichtung (5) des Teilnehmers im Rechnernetz (4) nutzbar ist.

6. Kommunikationssystem (1) nach einem der Ansprüche 1 bis 5, **dadurch gekennzeichnet, dass zumindest ein Tell der** Identität im Rahmen des Aufbaus einer Kommunikationsverbindung seitens wenigstens einer Verwaltungseinrichtung des Mobilfunknetzes (2) und/oder seitens wenigstens einer Verwaltungseinrlchtung des Rechnernetzes (4) **durch Abfrage des Nutzerregisters (6)** nutzbar ist.

7. Kommunikationssystem (1) nach einem der Ansprüche 1 bis 6, **gekennzeichnet durch** eine Übergangseinheit (9)) zur Kopplung des Mobilfunknetzes (2) mit dem Rechnernetz (4) für den Informationsaustausch.

8. Kommunikationssystem (1) nach Anspruch 7, **dadurch gekennzeichnet, dass** die Übergangseinheit ((9)) ausgebildet ist, im Mobilfunknetz (2) implementierte Sprach-, Bild- und/oder Textkommunikationsdienste zu unterstützen und seitens des Rechnernetzes (4) verfügbar zu machen, wobei Sprach-, Bild- und/oder Textkommunikationsdienste von einem vom Mobilfunknetz (2) genutzten Format in ein von dem Rechnernetz (4) genutztes Format umgewandelt werden und/oder von einem vom Rechnernetz (4) genutzten Format In ein von dem Mobilfunknetz (2) genutztes Format umgewandelt werden.

9. Kommunikationssystem nach Anspruch 8, **gekennzeichnet durch** Sprachtelefonle, Voice over IP, Videotelefonie, SMS, MMS, E-Mail. Instant Messaging, Konferenzdiensten und/oder Chatdiensten als Sprach-, Bild- und/oder Textkommunikationsdienste.

10. Kommunikationssystem (1) nach einem der Ansprüche 1 bis 9, **dadurch gekennzeichnet, dass** die Identität wenigstens eine weltweit eindeutige Information, **SIP-Identity**, zur Identifikation des Teilnehmers aufweist.

11. Kommunikationssystem (1) nach einem der Ansprüche 1 bis 10, **dadurch gekennzeichnet, dass** die Identität, **SIP-Identity**, wenigstens eine Zugangskennung aufweist.

12. Kommunikationssystem (1) nach einem der Ansprüche 1 bis 11, **dadurch gekennzeichnet, dass** die Identität wenigstens eine Adresse gemäß einem seitens des Rechnernetzes (4) genutzten Protokolls aufweist.

13. Kommunikationssystem (1) nach einem der Ansprüche 1 bis 12, **dadurch gekennzeichnet, dass** die Identität wenigstens ein Passwort zur Ermöglichung eines Zugangs zum Rechnernetz (4) aufweist.

14. Kommunikationssystem (1) nach einem der Ansprüche 1 bis 13, **dadurch gekennzeichnet, dass** die Identität wenigstens eine dem ein im Mobilfunknetz (2) betreibbares mobiles Endgerät (3) nutzenden Teilnehmer zugeordnete netzspezifische Mobilfunknetz-Rufnumme, MSISDN, aufweist.

15. Kommunikationssystem (1) nach einem der Ansprüche 1 bis 14, **dadurch gekennzeichnet, dass** die Identität wenigstens eine dem eine Datenendeinrichtung (5) des Rechnernetzes (4) nutzenden Teilnehmer zumindest temporär zuordbare netzspezifische Mobilfunknetz-Rufnummer aufweist.

16. Kommunikationssystem (1) nach einem der Ansprüche 1 bis 15, **dadurch gekennzeichnet, dass** die Identität wenigstens eine Statusinformation über die Erreichbarkeit eines Teilnehmers im Mobilfunknetz (2) und/oder im Rechnernetz (4) aufweist.

17. Kommunikationssystem (1) nach einem der Ansprüche 1 bis 16, **dadurch gekennzeichnet, dass** die Identität wenigstens eine Statusinformation Ober den Aufenthaltsort eines Teilnehmers im Mobilfunknetz (2) und/oder im Rechnernetz (4) aufweist.

18. Verfahren zum Austausch von Informationen zwischen in einem zellularen Mobilfunknetz (2) betreibbaren mobilen Endgeräten (3) gemäß dem GSM- und/oder UMTS-Funknetzstandard und/oder Datenendeinrichtungen (5) eines Rechnernetzes (4) in einem Kommunikationssystem (1) nach einem der Ansprüche 1 bis 17, **dadurch gekennzeichnet, dass zumindest ein Tell der** Identität eines Teilnehmer des Kommunikationssystems (1) für den Aufbau einer Kommunikationsverbindung zum Austausch von Sprache und/oder Daten **umfassenden** Informationen zwischen dem mobilen Endgerät (3) und/oder der Datenendeinrichtung (5) des jeweiligen Teilnehmers genutzt wird.

19. Verfahren nach Anspruch 18, **dadurch gekennzeichnet, dass** die Identität eines ein mobiles Endgerät (3) nutzenden Teilnehmers des Kommunikationssystems (1) zumindest teilweise für eine von einer Datenendelnrichtung (5) aus Initiierten Anforderung zum Aufbau einer Kommunikationsverbindung zum Austausch von Informationen, vorzugsweise Sprache und/oder Daten, mit dem mobilen Endgerät (3) genutzt wird.

20. Verfahren nach **Anspruch 18 oder Anspruch 19, dadurch gekennzeichnet, dass zumindest ein Tell der** Identität eines eine Datenendeinrichtung (5) nutzenden Teilnehmers des Kommunikationssystems (1) für eine von einem mobilen Endgerät (3) aus Initiierten Anforderung zum Aufbau einer Kommunikationsverbindung zum Austausch von **Sprache und/oder Daten umfassenden** Informationen mit der Datenendeinrichtung (5) genutzt wird.

21. Verfahren nach einem der Ansprüche 18 bis 20, **dadurch gekennzeichnet, dass** die Identität zumindest im Rahmen des Aufbaus einer Kommunikationsverbindung von **einer Vermittlungseinrichtung des Mobilfunknetzes (2) und/oder des Rechnernetzes (4)** aus dem zentralen Nutzerregister (6) des Kommunikationssystems (1) abgefragt wind,

22. Verfahren nach einem der Ansprüche 18 bis 21, **dadurch gekennzeichnet, dass** vor der Initiierung des Aufbaus der Kommunikationsverbindung die Erreichbarkeit und/oder der Aufenthaltsort des mobilen Endgerätes (3) im Mobilfunknetz (2) und/oder die Erreichbarkeit und/oder der Aufenthaltsort der Datenendeinrichtung (5) im Rechnernetz (4) **durch Abfrage oder Ermittlung der Statusinformation aus der Identität des Teilnehmers** bestimmt wird

23. Verfahren nach Anspruch 22, **dadurch gekennzeichnet, dass** die Bestimmung der Erreichbarkeit und/oder des Aufenthaltsorts durch einen vorgezogenen Endgerätesuchruf erfolgt.

24. Verfahren nach einem der Ansprüche 18 bis 23, **dadurch gekennzeichnet, dass** der Datenendeinrichtung (5) für die Kommunikationsverbindung seitens des Mobilfunknetzes (2) eine zumindest temporär nutzbare netzspezifische Mobilfunknetz-Rufnummer zugeordnet wird, wobei die Zuordnung seitens des zentralen Nutzerregisters (6) des Kommunikationssystems, seitens einer Verwaltungseinrichtung des Mobilfunknetzes (2) und/oder seitens einer Verwaltungssinrichtung des Rechnernetzes (5) im Rahmen der Initiierung des Aufbaus der Kommunikationsverbindung erfolgt und seitens der Identität des Teilnehmers im Nutzerregister (6) des Kommunikationssystems (1) erfasst wird.

## Claims

1. A communication system (1) consisting of a cellular mobile radio network (2) with mobile terminals (3) which can be operated therein, according to the GSM and/or UMTS radio network standard, a computer network (4) with data terminal devices (5) and a central user register (6), in which an unequivocal identity for each subscriber (3, 5) of the communication system (1) is gathered, which identity enables an information exchange between the mobile radio network (2) and the computer network (4), wherein information is transmitted in the mobile radio network (2) by using at least one protocol of the mobile radio network (2) and information is transmitted in the computer network (4) by using at least one protocol of the computer network (4), **characterized in that**
the central user register (6) permits an administration and providing of presence information of subscribers (3, 5) with respect to their availability, status and/or local position in the mobile radio network (2) and/or in the computer network (4).

2. A communication system (1) according to claim 1, **characterized in that** at least a part of the identity can be used for establishing a communication connection between a mobile terminal (3) of a subscriber in the mobile radio network (2) and a data terminal device (5) of a subscriber in the computer network (4).

3. A communication system (1) according to claim 1 or claim 2, **characterized in that** at least a part of the identity can be used for establishing a communication connection between a subscriber's mobile terminal (3) available in the mobile radio network (2) and a subscriber's data terminal device (5) available in the computer network (4).

4. A communication system (1) according to claim 2 or claim 3, **characterized in that** at least a part of the identity of a subscriber can be used for a request initiated by a data terminal device (5) of the computer network (4) for establishing a communication connection to a subscriber's mobile terminal (3) in the mobile radio network (2).

5. A communication system (1) according to claim 2 or claim 3, **characterized in that** at least a part of the identity of a subscriber can be used for a request initiated by a mobile terminal (3) of the mobile radio network (2) for establishing a communication connection to a subscriber's data terminal device (5) in the computer network (4).

6. A communication system (1) according to one of the claims 1 to 5, **characterized in that** at least a part of the identity can be used within the scope of establishing a communication connection by means of at least one administration device of the mobile radio network (2) and/or by means of at least one administration device of the computer network (4) by querying the user register (6).

7. A communication system (1) according to one of the claims 1 to 6, **characterized by** a transition unit (9) for coupling the mobile radio network (2) to the computer network (4) for the information exchange.

8. A communication system (1) according to claim 7, **characterized in that** the transition unit (9) is designed to support voice, image and/or text communication services implemented in the mobile radio network (2) and to make them available by means of the computer network (4), wherein voice, image and/or text communication services are converted from a format used by the mobile radio network (2) into a format used by the computer network (4) and/or from a format used by the computer network (4) into a format used by the mobile radio network (2).

9. A communication system (1) according to claim 8, **characterized by** voice telephony, voice over IP, video telephony, SMS, MMS, e-mail, instant messaging, conference services and/or chat services as voice, image and/or text communication services.

10. A communication system (1) according to one of the claims 1 to 9, **characterized in that** the identity comprises a globally unequivocal information item, SIP identity, for identifying the subscriber.

11. A communication system (1) according to one of the claims 1 to 10, **characterized in that** the identity, SIP identity, at least comprises one access code.

12. A communication system (1) according to one of the claims 1 to 11, **characterized in that** the identity at least comprises one address according to a protocol used by the computer network (4).

13. A communication system (1) according to one of the claims 1 to 12, **characterized in that** the identity at least comprises a pass word for enabling an access to the computer network (4).

14. A communication system (1) according to one of the claims 1 to 13, **characterized in that** the identity at least comprises a network-specific mobile radio network call number, MSISDN, which is allocated to the subscriber using a mobile terminal (3) operable in the mobile radio network (2).

15. A communication system (1) according to one of the claims 1 to 14, **characterized in that** the identity at least comprises a network-specific mobile radio network call number, which can be at least temporally allocated to the subscriber using a data terminal device (5) of the computer network (4).

16. A communication system (1) according to one of the claims 1 to 15, **characterized in that** the identity at least comprises one status information item with respect to the availability of a subscriber in the mobile radio network (2) and/or in the computer network (4).

17. A communication system (1) according to one of the claims 1 to 16, **characterized in that** the identity at least comprises one status information item with respect to the local position of a subscriber in the mobile radio network (2) and/or in the computer network (4).

18. A method for exchanging information between mobile terminals (3) which are operable in a cellular mobile radio network (2) according to the GSM and/or UMTS radio network standard, and/or data terminal devices (5) of a computer network (4) in a communication system (1) according to one of the claims 1 to 17,
**characterized in that**
at least a part of the identity of a subscriber of the communication system (1) is used for establishing a communication connection for exchanging information comprising voice and/or data between the mobile terminal (3) and/or the data terminal device (5) of the respective subscriber.

19. A method according to claim 18,
**characterized in that**
the identity of a subscriber of the communication system (1) who uses a mobile terminal (3) is at least partially used for a request initiated by a data terminal device (5) for establishing a communication connection for exchanging information, preferably voice and/or data, to the mobile terminal (3).

20. A method according to claim 18 or claim 19,
**characterized in that**
at least a part of the identity of a subscriber of the communication system (1) who uses a data terminal device (5) is used for a request initiated by a mobile terminal (3) for establishing a communication connection for exchanging information comprising voice and/or data, to the data terminal device (5).

21. A method according to one of the claims 18 to 20, **characterized in that** at least within the scope of establishing a communication connection, a switching facility of the mobile radio network (2) and/or the computer network (4) queries the identity from the central user register (6) of the communication system (1).

22. A method according to one of the claims 18 to 21, **characterized in that** before initiating the establishment of the communication connection, the availability and/or the local position of the mobile terminal (3) in the mobile radio network (2) and/or the availability and/or the local position of the data terminal device (5) in the computer network (4) is determined by querying or determining the status information item from the subscriber's identity.

23. A method according to claim 22, **characterized in that** the determination of the availability and/or the local position is realized by a pre-paging.

24. A method according to one of the claims 18 to 23, **characterized in that** an at least temporally usable network-specific mobile radio network call number is allocated to the data terminal device (5) by the mobile radio network (2) for the communication connection, wherein the allocation is carried out by the central user register (6) of the communication system, by an administration device of the mobile radio network (2) and/or by an administration device of the computer network (4) within the scope of the initiation of the establishment of the communication connection and is gathered in the user register (6) of the communication system (1) by means of the subscriber's identity.

## Revendications

1. Système de communication (1) composé d'un réseau radio mobile cellulaire (2) avec des terminaux mobiles (3) fonctionnant dans celui-ci, selon le standard de réseau radio GSM et/ou UMTS, d'un réseau d'ordinateurs (4) avec des dispositifs terminaux de données (5) et d'un registre central d'utilisateurs (6), dans lequel une identité univoque est enregistrée pour chaque abonné (3, 5) du système de communication (1), laquelle identité permet un échange d'informations entre le réseau radio mobile (2) et le réseau d'ordinateurs (4), des informations étant transmises dans le réseau radio mobile (2) en utilisant au moins un protocole du réseau radio mobile (2) et des informations étant transmises dans le réseau d'ordinateurs (4) en utilisant au moins un protocole du réseau d'ordinateurs (4),
**caractérisé en ce que**
le registre central d'utilisateurs (6) permet d'administrer et de fournir des informations de présence d'abonnés (3, 5) par rapport à leur accessibilité, leur statut et/ou leur position locale dans le réseau radio mobile (2) et/ou dans le réseau d'ordinateurs (4).

2. Système de communication (1) selon la revendication 1, **caractérisé en ce qu'**au moins une partie de l'identité peut être utilisée pour établir une liaison de communication entre un terminal mobile (3) d'un abonné dans le réseau radio mobile (2) et un dispositif terminal de données (5) d'un abonné dans le réseau d'ordinateurs (4).

3. Système de communication (1) selon la revendication 1 ou la revendication 2, **caractérisé en ce qu'**au moins une partie de l'identité peut être utilisée pour établir une liaison de communication entre un terminal mobile (3) d'un abonné accessible dans le réseau radio mobile (2) et un dispositif terminal de données (5) d'un abonné accessible dans le réseau d'ordinateurs (4).

4. Système de communication (1) selon la revendication 2 ou la revendication 3, **caractérisé en ce qu'**au moins une partie de l'identité d'un abonné peut être utilisée pour une demande initiée par un dispositif terminal de données (5) du réseau d'ordinateurs (4) par rapport à l'établissement d'une liaison de communication avec un terminal mobile (3) de l'abonné dans le réseau radio mobile (2).

5. Système de communication (1) selon la revendication 2 ou la revendication 3, **caractérisé en ce qu'**au moins une partie de l'identité d'un abonné peut être utilisée pour une demande initiée par un terminal mobile (3) du réseau radio mobile (2) par rapport à l'établissement d'une liaison de communication avec un dispositif terminal de données (5) de l'abonné dans le réseau d'ordinateurs (4).

6. Système de communication (1) selon l'une des revendications 1 à 5, **caractérisé en ce qu'**au moins une partie de l'identité peut être utilisée dans le cadre de l'établissement d'une liaison de communication par moyen d'au moins un dispositif d'administration du réseau radio mobile (2) et/ou par moyen d'au moins un dispositif d'administration du réseau d'ordinateurs (4) en interrogeant le registre d'utilisateurs (6).

7. Système de communication (1) selon l'une des revendications 1 à 6, **caractérisé par** une unité de transition (9) pour coupler le réseau radio mobile (2) au réseau d'ordinateurs (4) pour l'échange d'informations.

8. Système de communication (1) selon la revendication 7, **caractérisé en ce que** l'unité de transition (9) est configurée pour soutenir des services de communication vocale, visuelle et/ou par texte implémentés dans le réseau radio mobile (2) et les rendre disponibles par moyen du réseau d'ordinateurs (4), des services de communication vocale, visuelle et/ou par texte étant convertis d'un format utilisé par le réseau radio mobile (2) en un format utilisé par le réseau d'ordinateurs (4) et/ou d'un format utilisé par le réseau d'ordinateurs (4) en un format utilisé par le réseau radio mobile (2).

9. Système de communication (1) selon la revendication 8, **caractérisé par** téléphonie vocale, Voix sur IP, téléphonie vidéo, SMS, MMS, e-mail, messagerie instantanée, des services de conférence et/ou des services de chat en tant que services de communication vocale, visuelle et/ou par texte.

10. Système de communication (1) selon l'une des revendications 1 à 9, **caractérisé en ce que** l'identité comprend au moins une information univoque au monde, l'identité SIP, pour identifier l'abonné.

11. Système de communication (1) selon l'une des revendications 1 à 10, **caractérisé en ce que** l'identité, l'identité SIP, comprend au moins un code d'accès.

12. Système de communication (1) selon l'une des revendications 1 à 11, **caractérisé en ce que** l'identité comprend au moins une adresse selon un protocole utilisé par le réseau d'ordinateurs (4).

13. Système de communication (1) selon l'une des revendications 1 à 12, **caractérisé en ce que** l'identité comprend au moins un mot de passe pour permettre l'accès au réseau d'ordinateurs (4).

14. Système de communication (1) selon l'une des revendications 1 à 13, **caractérisé en ce que** l'identité comprend au moins un numéro d'appel de réseau radio mobile (MSISDN) spécifique au réseau et attribué à l'abonné utilisant un terminal mobile (3) fonctionnant dans le réseau radio mobile (2).

15. Système de communication (1) selon l'une des revendications 1 à 14, **caractérisé en ce que** l'identité comprend au moins un numéro d'appel de réseau radio mobile (MSISDN) spécifique au réseau, qui peut être attribué au moins temporairement à l'abonné qui utilise un dispositif terminal de données (5) du réseau d'ordinateurs (4).

16. Système de communication (1) selon l'une des revendications 1 à 15, **caractérisé en ce que** l'identité comprend au moins une information de statut par rapport à l'accessibilité d'un abonné dans le réseau radio mobile (2) et/ou dans le réseau d'ordinateurs (4).

17. Système de communication (1) selon l'une des revendications 1 à 16, **caractérisé en ce que** l'identité comprend au moins une information de statut par rapport à la position locale d'un abonné dans le réseau radio mobile (2) et/ou dans le réseau d'ordinateurs (4).

18. Procédé d'échange d'informations entre des terminaux mobiles (3) fonctionnant dans un réseau radio mobile cellulaire (2) selon le standard de réseau radio GSM et/ou UMTS, et/ou des dispositifs terminaux de données (5) d'un réseau d'ordinateurs (4) selon l'une des revendications 1 à 17,
**caractérisé en ce qu'**
au moins une partie de l'identité d'un abonné du système de communication (1) est utilisée pour établir une liaison de communication pour échanger des informations comprenant du langage et/ou des données entre le terminal mobile (3) et/ou le dispositif terminal de données (5) de l'abonné respectif.

19. Procédé selon la revendication 18,
**caractérisé en ce que**
l'identité d'un abonné du système de communication (1), qui utilise un terminal mobile (3), est au moins partiellement utilisée pour une demande initiée par un dispositif terminal de données (5) pour établir une liaison de communication pour échanger des informations, de préférence du langage et/ou des données, avec le terminal mobile (3).

20. Procédé selon la revendication 18 ou la revendication 19,
**caractérisé en ce qu'**
au moins une partie de l'identité d'un abonné du système de communication (1), qui utilise un dispositif terminal de données (5), est utilisée pour une demande initiée par un terminal mobile (3) pour établir une liaison de communication pour échanger des informations comprenant du langage et/ou des données, avec le dispositif terminal de données (5).

21. Procédé selon l'une des revendications 18 à 20, **caractérisé en ce qu'**au moins dans le cadre de l'établissement d'une liaison de communication, un commutateur du réseau radio mobile (2) et/ou du réseau d'ordinateurs (4) demande l'identité dans le registre central d'utilisateurs (6) du système de communication (1).

22. Procédé selon l'une des revendications 18 à 21, **caractérisé en ce qu'**avant l'initiation de l'établissement de la liaison de communication, l'accessibilité et/ou la position locale du terminal mobile (3) dans le réseau radio mobile (2) et/ou l'accessibilité et/ou la position locale du dispositif terminal de données (5) dans le réseau d'ordinateurs (4) est déterminée en demandant ou déterminant l'information de statut à partir de l'identité de l'abonné.

23. Procédé selon la revendication 22, **caractérisé en ce que** l'accessibilité et/ou la position locale est déterminée par un téléavertissement de terminal anticipé.

24. Procédé selon l'une des revendications 18 à 23, **caractérisé en ce qu'**un numéro d'appel de réseau radio mobile spécifique au réseau et au moins temporairement utilisable est attribué au dispositif terminal de données (5) par le réseau radio mobile (2) pour la liaison de communication, l'attribution étant exécutée par le registre central d'utilisateurs (6) du système de communication, par un dispositif d'administration du réseau radio mobile (2) et/ou par un dispositif d'administration du réseau d'ordinateurs (4) dans le cadre de l'initiation de l'établissement de la liaison de communication et étant saisie dans le registre d'utilisateurs (6) du système de communication (1) par moyen de l'identité de l'abonné.
